# EUROPÄISCHE PATENTSCHRIFT

(11) **EP 0 997 258 B1**
(45) Veröffentlichungstag und Bekanntmachung des Hinweises auf die Patenterteilung: **04.09.2002**
(21) Anmeldenummer: 99121315.8
(22) Anmeldetag: 26.10.1999
(51) Int. Cl.: B29C 51/26, B29C 51/10

(54) **Einrichtung zum Formen eines schalenförmigen Kunststoffteils durch Tiefziehen**
Device for forming a tray shaped deep drawn plastic article
Dispositif pour former par emboutissage une pièce de type plateau en matière plastique

(30) Priorität: 30.10.1998 DE 19850042
(43) Veröffentlichungstag der Anmeldung: 03.05.2000
(73) Patentinhaber: HOESCH Metall + Kunststoffwerk GmbH & Co., 52372 Kreuzau (DE)
(72) Erfinder: Brück, Heinz-Peter, 52353 Düren (DE); Gacek, Franz, 52391 Vettweiss (DE)
(74) Vertreter: Langmaack, Jürgen, Dipl.-Ing.

(56) Entgegenhaltungen:
- EP-A- 0 692 365
- DE-C- 19 536 867
- DE-U- 29 617 441

## Beschreibung

Für die Herstellung von schalenförmigen Kunststoffteilen, beispielsweise Duschwannen, Badewannen oder auch großen Whirlpools, bietet das Verfahren des Tiefziehens aus einer Kunststoffplatine vielfältige Gestaltungsmöglichkeiten hinsichtlich der Form und der Abmessungen des Wannentroges, der Form seiner Öffnung sowie der Form des anschließenden Wannenrandteils. Durch auswechselbare Tiefziehformen können auf einer Tiefziehmaschine die unterschiedlichsten Wannenformen gefertigt werden. Hierzu ist es jedoch erforderlich, der Tiefziehform eine sogenannten Fensterplatte zuzuordnen, deren Fensteröffnung an die Geometrie der Öffnung des Wannentroges und/oder an die Geometrie des die Öffnung des Wannentroges begrenzenden Randteiles angepaßt ist und auf dem die tiefzuziehende Platine festgeklemmt wird. Die Fensterplatte deckt zugleich den Saugkasten abdichtend ab, in dem die Tiefziehform auf ihrem Hubtisch angeordnet ist. Für jedes einzelne Modell war es erforderlich, eine entsprechend große Platte mit der für das jeweilige Modell notwendigen Fensteröffnung vorzuhalten.

Um diesem Nachteil abzuhelfen, war man dazu übergegangen, den Saugkasten mit vier Teilplatten abzudecken, die in einer Ebene ausgerichtet sind und randseitig gegeneinander stoßen und die relativ zueinander verschiebbar sind, so daß durch eine entsprechende Verschiebung der einzelnen Teilplatten zueinander innerhalb weiter Grenzen eine eckige Fensteröffnung einstellbar war, wobei die Verstellmöglichkeiten so vorgesehen waren, daß sowohl quadratische Fensteröffnungen mit beliebiger Kantenlänge als auch rechteckige Fensteröffnungen mit beliebigen Seitenverhältnissen der Ränder der Fensteröffnung innerhalb vorgegebener Einstellbereiche vorgebbar waren, vergl. EP-A- 0 692 365, Zur Herstellung von schalenförmigen Kunststoffteilen, insbesondere Badewannen mit Standardtrogformen hat es sich als ausreichend erwiesen, derartige quadratische oder rechteckige Fensteröffnungen vorzusehen. Bei komplizierteren Trogformen, insbesondere bei komplizierteren Geometrien der Trogöffnung ergeben sich bei einem derartigen Fensterrahmen auch Nachteile hinsichtlich des Materialflusses beim Ziehvorgang.

Der Erfindung liegt die Aufgabe zugrunde, eine Einrichtung zum Formen eines schalenförmigen Kunststoffteils zu schaffen, die die Herstellung einer höheren Formenvielfalt und die Möglichkeit zur Verbesserung des Materialflusses durch Anpassung an die Geometrie des herzustellenden Kunststoffteiles bietet.

Diese Aufgabe wird gelöst durch eine Einrichtung zum Formen eines schalenförmigen Kunststoffteils aus einer Platine durch Tiefziehen, mit einer auf einem Hubtisch befestigten schalenförmigen Tiefziehform, wobei der Hubtisch in einem nach oben offenen Saugkasten angeordnet ist, mit einem oberhalb des Saugkastens angeordneten absenkbaren Spannrahmen zum Klemmen der Platine gegen einen der Öffnung des Saugkastens zugeordneten Fensterrahmen, der eine Fensteröffnung aufweist, die die Tiefziehform in angehobener Position umgreift, und mit kulissenartig verschiebbaren, die Öffnung des Saugkastens abdeckenden Klemmelementen, die zur Fixierung am Fensterrahmen anliegen. Diese Anordnung hat den Vorteil, daß die den Saugkasten abdeckenden Klemmelemente mit ihren Innenkanten nicht mehr die Fensteröffnung begrenzen sondern lediglich dazu dienen, einen gesonderten Fensterrahmen zu klemmen. Der Fensterrahmen ist in seiner Außenkontur an die Klemmelemente angepaßt und weist in der Regel einen rechteckigen oder quadratischen Verlauf auf, kann aber auch einen anderen Verlauf aufweisen. Die für die Herstellung des schalenförmigen Kunststoffteils wichtige Kontur der Fensteröffnung wird durch den jetzt beliebig gestaltbaren Innenrand der Fensteröffnung des Fensterrahmen gebildet, so daß eine individuelle Anpassung der Kontur der Fensteröffnung sowohl an die Form des herzustellenden Kunststoffteils als auch an die durch die Form des Kunststoffteils bedingten unterschiedlichen Fließbedingungen für das Kunststoffmaterial beim Tiefziehen möglich ist. Dadurch, daß die Klemmelement kulissenartig gegeneinander verschiebbar sind, können innerhalb vorgegebener Grenzen Fensterrahmen mit beliebigen Außenabmessungen verwendet werden. Ein weiterer Vorteil dieser Anordnung besteht darin, daß die Fensterrahmen ein noch handhabbares Gewicht aufweisen und dementsprechend bei einem Formenwechsel mit normalen Hebemitteln in die Tiefzieheinrichtung eingesetzt und auch aus dieser wieder entnommen werden können. Die Rüstzeiten für einen Formenwechsel können erheblich verkürzt werden.

In zweckmäßiger Ausgestaltung der Erfindung ist vorgesehen, daß die Klemmelemente die Öffnung des Saugkastens abdichtend überdecken.

In einer bevorzugten Ausgestaltung der Erfindung ist vorgesehen, daß die Klemmelemente als Platten ausgebildet sind, die paarweise gegeneinander verschiebbar angeordnet sind. Besonders vorteilhaft ist es hierbei, wenn die Paare der plattenförmig ausgebildeten Klemmelemente in parallelen Ebenen übereinander angeordnet sind. Diese Anordnung bietet den Vorteil, daß innerhalb des vorgegebenen Einstellbereichs für die Fensterrahmen die Außenkontur des Saugkastens nicht überschritten werden muß, da die plattenförmig ausgebildeten Klemmelemente aufeinanderliegend gegeneinander verschiebbar sind. zweckmäßig ist es hierbei, wenn die Klemmelementepaare in ihrer Schieberichtung im Winkel zueinander ausgerichtet sind, beispielsweise um 90° versetzt ausgerichtet sind.

In weiterer vorteilhafter Ausgestaltung der Erfindung ist vorgesehen, daß ein erstes Klemmelementepaar sich parallel zu einer Bedienseite der Einrichtung erstreckt. Hierbei ist es besonders zweckmäßig, daß bei dem parallel zur Bedienseite hin ausgerichteten ersten Klemmelementepaar das bedienseitige vordere Klemmelement schmaler ist als das hintere Klemmelement. Hierdurch ist gewährleistet, daß der vordere Rand der Fensteröffnung des Fensterrahmens sich noch nahe der Bedienseite befindet, so daß das Einlegen und Positionieren einer tiefzuziehenden Platine für das Bedienungspersonal noch weitgehend ohne Zwangshaltung möglich ist.

In weiterer Ausgestaltung der Erfindung ist vorgesehen, daß die beiden Klemmelementepaare jeweils mit wenigstens einem Stellantrieb verbunden sind, durch die die Klemmelemente eines jeden Klemmelementepaares gegenläufig zueinander bewegbar sind. Hierdurch wird das Einlegen und Klemmen eines Fensterrahmens bei einem Modellwechsel erheblich vereinfacht. Der Stellantrieb kann von Hand und/oder motorisch betätigbar sein und muß zumindest in der Klemmstellung arretieren.

In Ausgestaltung der Erfindung ist der Fensterrahmen an seiner Umfangsfläche mit Aufnahmenuten für die Kanten der Klemmelementepaare versehen. Hierbei ist es zweckmäßig, wenn die Aufnahmenuten und/oder die Kanten der Klemmelementepaare mit Dichtungen versehen sind.

Die Erfindung wird anhand schematischer Zeichnungen eines Ausführungsbeispiels näher erläutert. Es zeigen:
- Fig. 1: einen Vertikalschnitt durch eine Einrichtung zum Tiefziehen von Badewannen,
- Fig. 2: eine Aufsicht auf die Einrichtung gem. Fig. 1 mit geöffneten Klemmelementen und positioniertem Fensterrahmen,
- Fig. 3: die Aufsicht gem. Fig. 2 mit geschlossenen Klemmelementen,
- Fig. 4: einen Schnitt gem. der Linie IV-IV in Fig. 3.

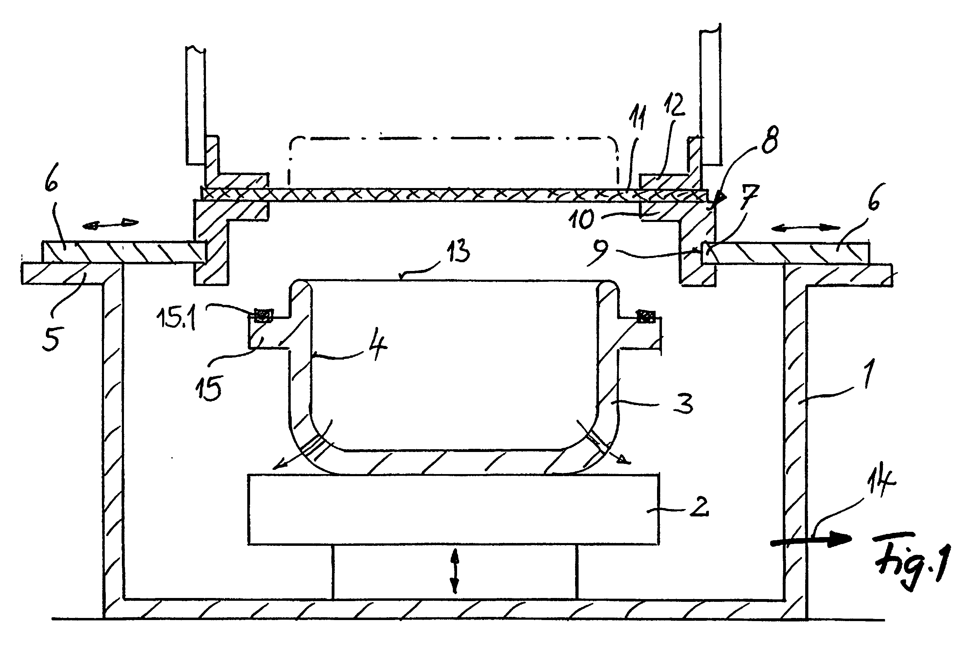

Wie die schematische Schnittdarstellung gem. Fig. 1 erkennen läßt, weist eine Einrichtung zum Tiefziehen von schalenförmigen Kunststoffteilen, hier einer Badewanne, einen Saugkasten 1 auf, in dem ein Hubtisch 2 angeordnet ist. Auf dem Hubtisch 2 ist eine Tiefziehform 3 lösbar befestigt, deren Innenkontur 4 der Form des herzustellenden schalenförmigen Kunststoffteils entspricht. Die Öffnung des Saugkastens 1 ist mit einem Rand 5 versehen, auf dem plattenförmige Klemmelemente 6, die in ihrem Aufbau nachstehend noch näher beschrieben werden, abdichtend und hin und her verschiebbar gelagert sind. Mit den innenliegenden Kanten 7 der Klemmelemente 6 ist ein Fensterrahmen 8 eingeklemmt, der auf seinem Außenumfang mit einer Nut 9 versehen ist. Der Fensterrahmen 8 weist einen Auflageschenkel 10 auf, auf dem eine Kunststoffplatine 11 aufgelegt und mit Hilfe eines von oben absenkbaren Spannrahmens 12 gegen den Auflageschenkel 10 des Fensterrahmens 8 fest und abdichtend geklemmt werden kann.

Zum Tiefziehen wird zunächst die Platine 11 über Heizstrahler aufgeheizt. Dadurch wird über den Hubtisch 2 die Tiefziehform 3 so weit unter entsprechender Verformung der Platine 11 angehoben, daß der obere Begrenzungsrand 13 der Öffnung des Formtroges die Spannebene der aufgeheizten Platine 11 überragt, wie dies strichpunktiert angedeutet ist und so ein umlaufender Rand geformt wird. Hierdurch ergibt sich gleichzeitig ein dichter Abschluß des Troginnenraumes, so daß anschließend über eine entsprechende Unterdruckeinrichtung 14 der Innenraum der Tiefziehform 4 unter Unterdruck gesetzt, und die Luft über Kanäle 3.1 in der Tiefziehform abgesaugt, so daß die Kunststoffplatine in den Innenraum der Tiefziehform 3 eingezogen wird. Auf der Außenseite der Tiefziehform 3 kann ein umlaufender, stegförmiger Ansatz 15 vorgesehen werden, der auf seiner Oberseite mit einer entsprechenden Dichtung 15.1 versehen ist. In angehobener Position liegt diese Dichtung 15.1 an einer entsprechenden Gegenfläche am Fensterrahmen 8 an und sorgt somit für eine zuverlässige Abdichtung des Troginnenraumes gegenüber der Umgebung.

Für einen Modellwechsel muß sowohl die Tiefziehform 3 der Fensterrahmen 8, und auch der Spannrahmen 12 ausgewechselt werden, da für jede Tiefziehform ein eigener Fensterrahmen 8 und ein eigener Spannrahmen 12 vorzusehen sind. Hierzu wird zunächst die Tiefziehform 3 über den Hubtisch so weit angehoben, daß auf der Außenseite der Tiefziehform 3 angeordnete Ansätze 15 am Fensterrahmen 8 zur Anlage kommen. Der Spannrahmen 12 ist hierbei zuvor abgesenkt und von seiner Hubeinrichtung gelöst worden, so daß die Tiefziehform 3 mit ihrem oberen Rand durch die Öffnung sowohl des Fensterrahmens 8 als auch des Spannrahmens 12 hindurchragt und mit den Ansätzen 15 den Fensterrahmen 8 und den Spannrahmen 12 trägt. In dieser Position werden die Klemmelemente 6 zurückgezogen, so daß die Tiefziehform 3 nach dem Absenken vom Hubtisch 2 gelöst und aus dem Saugkasten 1 zusammen mit dem aufliegenden Fensterrahmen 8 und dem aufliegenden Spannrahmen 12 in das Formenlager abtransportiert werden können. Die Montage einer neuen Tiefziehform erfolgt dann in umgekehrten Reihenfolge.

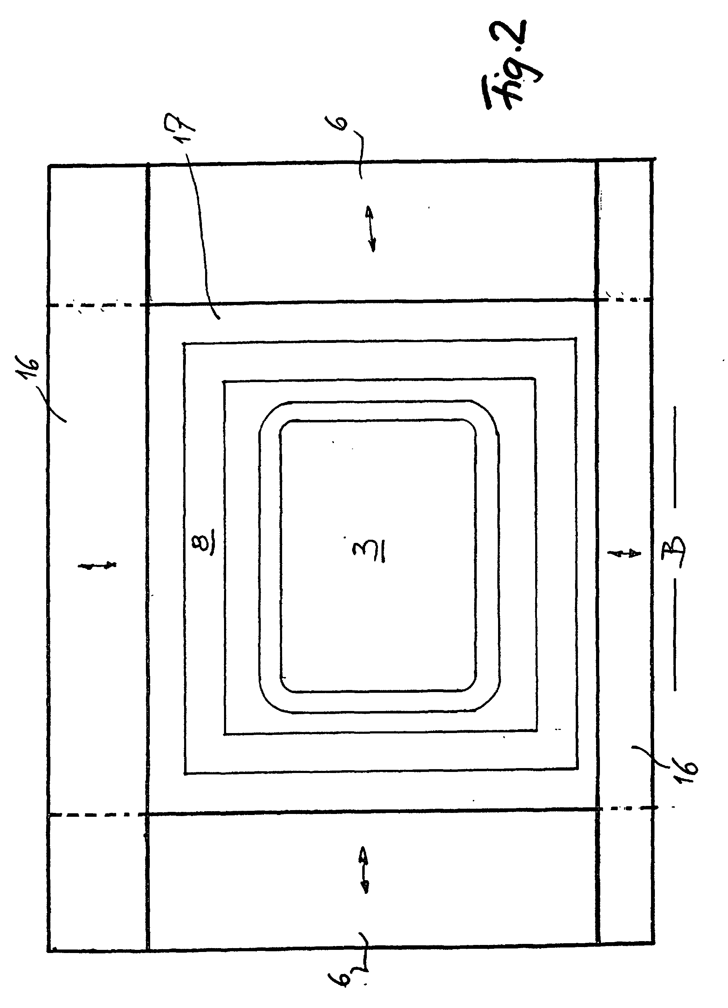

Fig. 2 zeigt eine Aufsicht auf die Einrichtung gem. Fig. 1. Wie die Aufsicht erkennen läßt, sind den beiden paarweise seitlich angeordneten Klemmelementen 6 parallel zur Bedienseite B verlaufende, ebenfalls paarweise angeordnete Klemmelemente 16 zugeordnet. In Fig. 2 sind die beiden Klemmelementepaare 6 und 16 in geöffneter Stellung dargestellt, wobei die größtmögliche Öffnungsweite der Klemmöffnung 17 sichtbar ist. Während die beiden Klemmelemente 6 gleich groß ausgebildet sind, sind die Klemmelemente 16 unterschiedlich groß ausgebildet, wobei das bedienseitige vordere Klemmelement 16 schmaler ist als das hintere Klemmelement 16.

Die Klemmelemente 6 und die Klemmelemente 16 sind plattenförmig ausgebildet und sind paarweise gegeneinander verschiebbar angeordnet. Hierbei liegen die Klemmelementepaare 16 in ihren Überdeckungsbereichen über den Klemmelementepaaren 6, sind also in zwei parallelen Ebenen übereinander angeordnet.

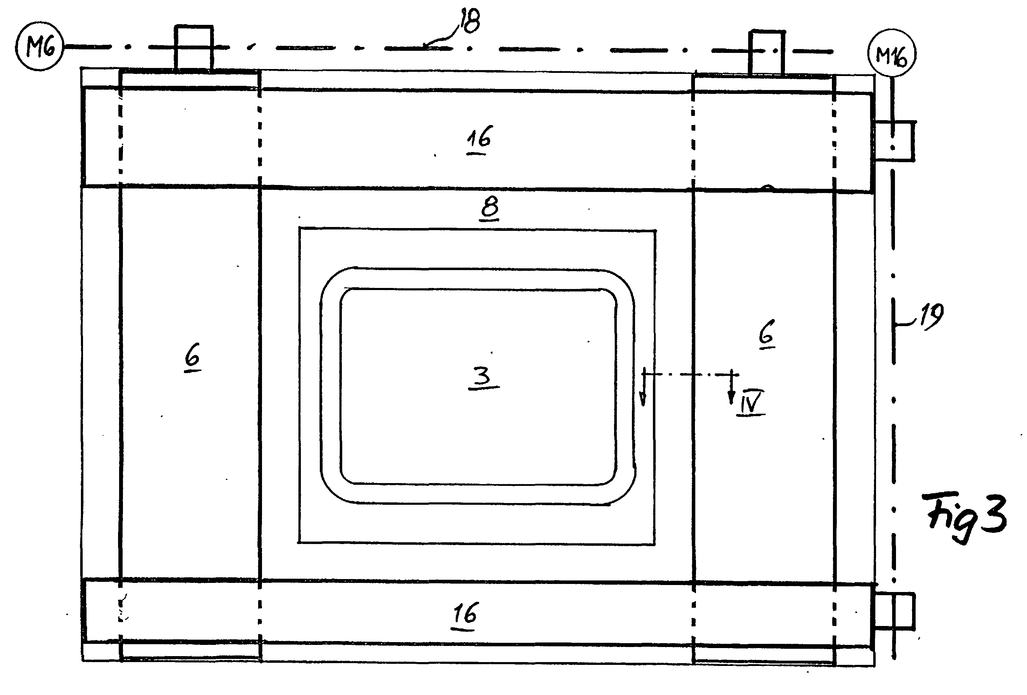

Bei einem Modellwechsel wird, wie anhand von Fig. 1 beschrieben, zunächst die Tiefziehform 3 mit aufgelegtem Fensterrahmen 8 und daraufliegenden Spannrahmen 12 auf den abgesenkten Hubtisch aufgesetzt. Bei der Erstmontage dieser Form ist die Form mit Positionierungen versehen, so daß bei dem hier beschriebenen Modellwechsel die Tiefziehform genau positioniert auf dem Hubtisch 2 abgesetzt werden kann. Anschließend wird der Hubtisch 2 mit der fixierten Tiefziehform 3 so weit angehoben, daß die Klemmelementepaare 6 und 16 in die zugeordneten Nuten 9 am Fensterrahmen 8 einfahren können und den Fensterrahmen 8 fixieren können. Der Spannrahmen 12 wird mit seiner Hubeinrichtung verbunden. Diese Betriebssituation ist in Fig. 3 dargestellt.

Aus der Anordnung der Klemmelementepaare 6 und 16 zueinander ist ersichtlich, daß bei einer Bewegung der beiden Klemmelementepaare in Richtung auf den Fensterrahmen 8 die Außenkontur des Saugkastens bzw, der Begrenzung der Einrichtung nicht überschritten wird, so daß sich unabhängig von der Größe der jeweils eingesetzten Tiefziehform das Arbeitsfeld um die Einrichtung herum unverändert bleibt.

Wie aus Gründen der vereinfachten Darstellung nur in Fig. 3 gezeigt, sind die Klemmelemente 6 beispielsweise über wenigstens eine antreibbare Gewindespindel 18, deren Gewindesteigung gegenläufig ausgerichtet ist, miteinander verbunden, so daß über einen Antrieb M6 die Klemmelemente 6 aufeinander zu und voneinander weg verschoben werden können.

Entsprechend sind auch die Klemmelemente 16 über wenigstens eine Gewindespindel 19 mit gegenläufiger Gewindesteigung miteinander verbunden, die ihrerseits über einen Antrieb M16 antreibbar ist, so daß je nach Drehrichtung, wie beim Klemmelementepaar 6, das Klemmelementepaar 16 schließend gegeneinander und öffnend voneinander weg verschiebbar ist. Die Antriebe M6 und M16 können motorisch oder von Hand wirken.

Es ist aber auch möglich, jedes Klemmelement eines Klemmelementepaares mit einem eigenen Antrieb zu versehen, so daß die einzelnen Klemmelemente eines Paares unabhängig voneinander bewegbar sind. Entsprechend muß auch der Spannrahmen 12 in der Ebene verschiebbar ausgeführt sein. Dies bietet eine größere Freiheit in der Positionierung der Klemmöffnung 17 gegenüber dem Hubtisch, so daß zur Anpassung an die Fließvorgänge beim Tiefziehen noch die Möglichkeit besteht, den Fensterrahmen 8 und den Spannrahmen 12 relativ zur Tiefziehform 3 zu verschieben.

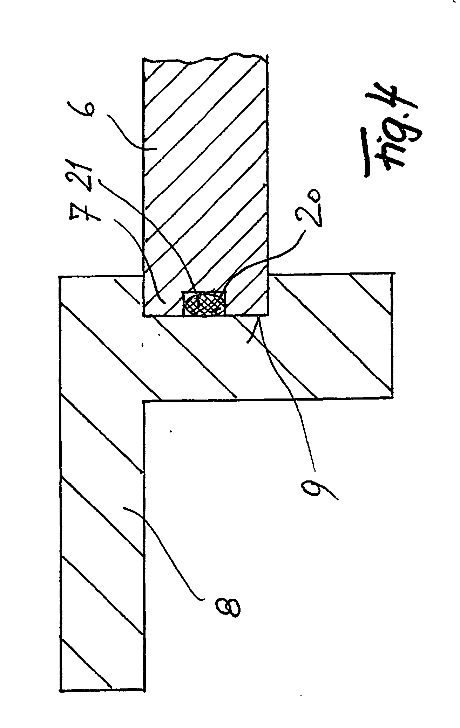

In Fig. 4 ist in einem Schnitt gem. der Linie IV-IV in Fig. 3 in größerem Maßstab die Verbindung zwischen dem Fensterrahmen 8 und einem Klemmelement, beispielsweise hier dem Klemmelement 6, dargestellt. Die Vorderkante 7 des Klemmelementes 6 greift hierbei in die Nut 9 ein, so daß der Rahmen formschlüssig gehalten ist. Die Vorderkante 7 weist hierbei eine nutförmige Ausnehmung 20 auf, in die ein elastisches Dichtprofil 2leingelegt ist, das beim Andrücken des Klemmelementes 6 gegen den Nutgrund der Nut 9 um ein vorgegebenes Maß verpreßt wird, so daß eine zuverlässige Abdichtung gegeben ist. Die Anordnung ist hierbei so getroffen, daß die den Klemmelementen 6 zugeordneten Nuten 9 in einer anderen Ebene am Fensterrahmen 8 verlaufen, als die den Klemmelementen 16 zugeordneten Nuten 9. Durch die Überdeckung im Eckenbereich ist jedoch eine ausreichende Abdichtung gegeben, so daß weder das Tiefziehen noch ein Vorblasen der Platine beeinträchtigt wird.

Der Fensterrahmen 8 kann hierbei aus einem einfachen Winkelprofil hergestellt werden. Die notwendige Anpassung an die Umfangskontur der Tiefziehform 3 kann durch entsprechend eingeschweißte Konturbleche vorgenommen werden. Dies gilt auch für den Spannrahmen 12, der in gleicher Weise angepaßt werden kann. Die Außenkontur des Fensterrahmens 8 und dementsprechend auch die Kontur der klemmenden Ränder der Klemmelemente 6 und/oder 16, können auch einen nicht-geradlinigen Verlauf aufweisen.

Der Fensterrahmen 8 ist zwar formschlüssig über die Kanten der Klemmelemente 6 bzw. 16 und die Nut 9 fixiert. Der verbleibende Materialspalt reicht jedoch aus, um beim Aufheizen der Einrichtung einen Wärmeabfluß aus dem Fensterrahmen, auf den die aufzuheizende Platine 11 aufgeklemmt ist, in die plattenförmigen Klemmelemente so zu vermindern, daß nach einem Formwechsel schon nach kurzer Zeit der Fensterrahmen 8 die erforderliche Betriebstemperatur erreicht hat. Durch entsprechende Auskleidungen der Nuten 9 oder Umkleidungen der Stirnkanten 7 der Klemmelemente 6, 16 mit einem hitzebeständigen, wärmeisolierenden Material, beispielsweise entsprechenden dünnen Profilen aus PTFE, kann die isolierende Wirkung des den Wärmeabfluß vom Fensterrahmen 8 auf die großen plattenförmigen Klemmelemente 6, 16 noch weiter vermindert werden.

Die mit der erfindungsgemäßen Einrichtung mögliche schnelle Montagezeit beim Wechsel einer Tiefziehform und die kurze Aufheizzeit nach einem Wechsel einer Tiefziehform ermöglicht eine höhere Produktivität, so daß durch die entsprechend verkürzten Rüstzeiten und Anwärmzeiten ein Formenwechsel schon für nur wenige Stückzahlen noch zu einer wirtschaftlichen Produktion führt.

## Patentansprüche

1. Einrichtung zum Formen eines schalenförmigen Kunststoffteils aus einer Platine (11) durch Tiefziehen, mit einer auf einem Hubtisch (2) befestigten schalenförmigen Tiefziehform (3), wobei der Hubtisch (2) in einem nach oben offenen Saugkasten (1) angeordnet ist, mit einem oberhalb des Saugkastens (1) angeordneten absenkbaren Spannrahmen (12) zum Klemmen der Platine (11) gegen einen der Öffnung des Saugkastens (12) zugeordneten Fensterrahmen (8), der eine Fensteröffnung aufweist, die die Tiefziehform (3) in angehobener Position umgreift, und mit kulissenartig verschiebbaren, die Öffnung des Saugkastens (1) abdeckenden Klemmelementen (6, 16), die zur Fixierung am Fensterrahmen (8) anliegen.

2. Einrichtung nach Anspruch 1, **dadurch gekennzeichnet, daß** die Klemmelemente (6, 16) die Öffnung des Saugkastens (1) abdichtend überdecken.

3. Einrichtung nach Anspruch 1 oder 2, **dadurch gekennzeichnet, daß** die Klemmelemente (6, 16) als Platten ausgebildet sind, die paarweise gegeneinander verschiebbar angeordnet sind.

4. Einrichtung nach einem der Ansprüche 1 bis 3, **dadurch gekennzeichnet, daß** die Paare der plattenförmig ausgebildeten Klemmelemente (6, 16) in parallelen Ebenen übereinander angeordnet sind.

5. Einrichtung nach einem der Ansprüche 1 bis 4, **dadurch gekennzeichnet, daß** die Klemmelementepaare (6, 16) in ihrer Schieberichtung im Winkel zueinander ausgerichtet sind.

6. Einrichtung nach einem der Ansprüche 1 bis 5, **dadurch gekennzeichnet, daß** ein erstes Klemmelementepaar (16) sich parallel zu einer Bedienseite (B) erstreckt.

7. Einrichtung nach einem der Ansprüche 1 bis 6, **dadurch gekennzeichnet, daß** bei den parallel zur Bedienseite (B) ausgerichteten ersten Klemmelementepaar (16) das bedienseitige vordere Klemmelement (16) schmaler ist als das hintere Klemmelement (16).

8. Einrichtung nach einem der Ansprüche 1 bis 7, **dadurch gekennzeichnet, daß** sich das erste Klemmelementepaar (16) über die Breite des Saugkastens (1) erstreckt.

9. Einrichtung nach einem der Ansprüche 1 bis 8, **dadurch gekennzeichnet, daß** sich das unter einem Winkel zum ersten Klemmelementepaar (16) ausgerichtete zweite Klemmelementepaar (6) über die Tiefe des Saugkastens (1) erstreckt.

10. Einrichtung nach einem der Ansprüche 1 bis 9, dadu5rch gekennzeichnet, daß die beiden Klemmelementepaare (6, 16) jeweils mit wenigstens einem Stellantrieb (M6, M16) verbunden sind, durch die die Klemmelemente (6, 16) eines jeden Klemmelementepaares gegenläufig zueinander bewegbar sind.

11. Einrichtung nach einem der Ansprüche 1 bis 10, **dadurch gekennzeichnet, daß** zumindest die Klemmelemente (16) des ersten Klemmelementepaares gleichsinnig bewegbar sind.

12. Einrichtung nach einem der Ansprüche 1 bis 11, **dadurch gekennzeichnet, daß** der Fensterrahmen (8) an seiner Umfangsfläche mit Aufnahmenuten (9) für die Kanten (7) der Klemmelementepaare (6, 16) versehen ist.

13. Einrichtung nach einem der Ansprüche 1 bis 12, **dadurch gekennzeichnet, daß** die Aufnahmenuten (9) und/oder die Kanten (7) der Klemmelementepaare (6, 16) mit Dichtungen (21) versehen sind.

## Claims

1. Device for forming a shell-shaped plastics part from a blank (11) by deep drawing, with a shell-shaped deep-drawing mould (3) which is secured to a lifting table (2), wherein the lifting table (2) is disposed in a suction box (1) which is open at the top, with a lowerable clamping frame (12), which is disposed above the suction box (1), for clamping the blank (11) against a window frame (8) which is associated with the opening of the suction box (12) and comprises a window opening which embraces the deep-drawing mould (3) in the raised position, and with clamping elements (6, 16) which can be displaced like sliding blocks, cover the opening of the suction box (1) and lie against the window frame (8) for fixing purposes.

2. Device according to Claim 1, **characterised in that** the clamping elements (6, 16) cover the opening of the suction box (1) in sealing fashion.

3. Device according to Claim 1 or 2, **characterised in that** the clamping elements (6, 16) are constructed as plates which are disposed so as to be displaceable in pairs with respect to one another.

4. Device according to any one of Claims 1 to 3, **characterised in that** the pairs of plate-shaped clamping elements (6, 16) are disposed in parallel planes one above the other.

5. Device according to any one of Claims 1 to 4, **characterised in that** the clamping element pairs (6, 16) are oriented at an angle to one another in their direction of displacement.

6. Device according to any one of Claims 1 to 5, **characterised in that** a first clamping element pair (16) extends parallel to an operating side (B).

7. Device according to any one of Claims 1 to 6, **characterised in that**, of the first clamping element pair (16) oriented parallel to the operating side (B), the front clamping element (16) on the operating side is narrower than the rear clamping element (16).

8. Device according to any one of Claims 1 to 7, **characterised in that** the first clamping element pair (16) extends over the width of the suction box (1).

9. Device according to any one of Claims 1 to 8, **characterised in that** the second clamping element pair (6), which is oriented at an angle to the first clamping element pair (16), extends over the depth of the suction box (1).

10. Device according to any one of Claims 1 to 9, **characterised in that** the two clamping element pairs (6, 16) are each connected to at least one actuating drive (M6, M16), via which the clamping elements (6, 16) of each clamping element pair can be moved in opposite directions to one another.

11. Device according to any one of Claims 1 to 10, **characterised in that** at least the clamping elements (16) of the first clamping element pair can be moved in the same direction.

12. Device according to any one of Claims 1 to 11, **characterised in that** the window frame (8) is provided at its circumferential surface with locating grooves (9) for the edges (7) of the clamping element pairs 6, 16).

13. Device according to any one of Claims 1 to 12, **characterised in that** the locating grooves (9) and/or the edges (7) of the clamping element pairs 6, 16) are provided with seals (21).

## Revendications

1. Dispositif pour former par emboutissage une pièce en forme de coque en matière plastique à partir d'une platine (11), comprenant un moule d'emboutissage en forme de coque fixé sur une table de levage (2), la table de levage (2) étant disposée dans un carter d'aspiration (1) ouvert vers le haut, un cadre de serrage (12) mobile disposé au-dessus du carter d'aspiration (1) pour serrer la platine (11) contre un châssis à fenêtre (8) associé à l'ouverture du carter d'aspiration (12), ledit châssis à fenêtre présentant une ouverture de fenêtre entourant le moule d'emboutissage (3) en position levée, et des éléments de serrage (6, 16) mobiles de manière coulissante recouvrant l'ouverture du carter d'aspiration (1) et s'appuyant sur le châssis à fenêtre (8) pour le fixer.

2. Dispositif selon la revendication 1, **caractérisé en ce que** les éléments de serrage (6, 16) recouvrent l'ouverture du carter d'aspiration (1) de façon étanche.

3. Dispositif selon la revendication 1 ou 2, **caractérisé en ce que** les éléments de serrage (6, 16) sont configurés en forme de plaques pouvant être déplacées par paires les unes par rapport aux autres.

4. Dispositif selon l'une quelconque des revendications 1 à 3, **caractérisé en ce que** les paires des éléments de serrage (6, 16) configurés en forme de plaques sont disposées dans des plans superposés.

5. Dispositif selon l'une quelconque des revendications 1 à 4, **caractérisé en ce que** les paires d'éléments de serrage (6, 16), présentent des directions de déplacement respectives formant un angle les unes par rapport aux autres.

6. Dispositif selon l'une quelconque des revendications 1 à 5, **caractérisé en ce qu'**une première paire d'éléments de serrage (16) s'étend parallèlement à un côté de service (B).

7. Dispositif selon l'une quelconque des revendications 1 à 6, **caractérisé en ce que** dans la première paire d'éléments de serrage (16) orientée parallèlement au côté de service (B), l'élément de serrage (16) avant du côté de service est plus mince que l'élément de serrage (16) arrière.

8. Dispositif selon l'une quelconque des revendications 1 à 7, **caractérisé en ce que** la première paire d'éléments de serrage (16) s'étend sur la largeur du carter d'aspiration (1).

9. Dispositif selon l'une quelconque des revendications 1 à 8, **caractérisé en ce que** la deuxième paire d'éléments de serrage (6) orientée sous un angle par rapport à la première paire d'éléments de serrage (16) s'étend sur la profondeur du carter d'aspiration (1).

10. Dispositif selon l'une quelconque des revendications 1 à 9, **caractérisé en ce que** les deux paires d'éléments de serrage (6, 16) sont respectivement reliées à au moins un actionneur (M6, M16) permettant de déplacer les éléments de serrage (6, 16) de chaque paire d'éléments de serrage dans des sens opposés.

11. Dispositif selon l'une quelconque des revendications 1 à 10, **caractérisé en ce qu'**au moins les éléments de serrage (16) de la première paire d'éléments de serrage peuvent être déplacés dans le même sens.

12. Dispositif selon l'une quelconque des revendications 1 à 11, **caractérisé en ce que** le châssis à fenêtre (8), sur sa surface circonférentielle, est pourvu de rainures de logement (9) pour les bords (7) des paires d'éléments de serrage (6, 16).

13. Dispositif selon l'une quelconque des revendications 1 à 12, **caractérisé en ce que** les rainures de logement (9) et/ou les bords (7) des paires d'éléments de serrage (6, 16) sont pourvus de joints d'étanchéité (21).
